# EUROPEAN PATENT SPECIFICATION

(11) **EP 0 663 985 B1**
(45) Date of publication and mention of the grant of the patent: **14.01.1998**
(21) Application number: 93923768.1
(22) Date of filing: 01.10.1993
(51) Int. Cl.: F02M 31/18, F01C 21/10

(54) **DEVICE AND METHOD FOR CONVERSION OF LIQUID FUEL INTO FUEL VAPOR AND MICROSCOPIC LIQUID DROPLETS WITH ELECTRONIC FUEL INJECTOR CONTROL**
VORRICHTUNG UND VERFAHREN ZUM UMWANDELN VON FLüSSIGEM BRENNSTOFF IN DAMPF UND MIKROSKOPISCHE FLüSSIGKEITSTROPFEN MITTELS EINER ELEKTRONISCHEN BRENNSTOFFEINSPRITZSTEUERUNG
DISPOSITIF ET PROCEDE DE TRANSFORMATION DE CARBURANT LIQUIDE EN VAPEUR ET EN GOUTTELETTES LIQUIDES MICROSCOPIQUES DE CARBURANT AU MOYEN D'UNE COMMANDE D'INJECTION ELECTRONIQUE DE CARBURANT

(30) Priority: 08.10.1992 US 958006; 13.04.1993 US 45248; 03.05.1993 US 55294
(43) Date of publication of application: 26.07.1995
(73) Proprietor: MICROFUELS, INC., Englewood, CO 80110 (US)
(72) Inventor: BIRCH, Desmond, A., Golden, CO 80403 (US); NEW, John, W., Littleton, CO 80123 (US)
(74) Representative: Knott, Stephen Gilbert
(86) International application number: US9309449
(87) International publication number: WO9409270

(56) References cited:
- DE-A- 1 403 296
- FR-A- 2 480 867
- GB-A- 884 171
- US-A- 3 335 944
- US-A- 3 552 895
- US-A- 4 483 305
- US-A- 4 483 307
- US-A- 5 226 400
- PATENT ABSTRACTS OF JAPAN vol. 9, no. 077 (M-369)6 April 1985 & JP,A,59 206 690 (YAMADA) 22 November 1984

## Description

### Technical Field

This invention relates to a device for converting liquid fuel into fuel vapor and microscopic liquid fuel particles prior to introduction into an intake manifold of an internal combustion engine. More particularly, the invention relates to the injection of macroscopic liquid fuel droplets into a rotary vane vacuum chamber wherein some of the macroscopic liquid fuel droplets are converted to a gaseous fuel and the rest are converted to microscopic liquid fuel droplets. After discharge from the vacuum chamber the gaseous fuel and microscopic liquid fuel droplets are mixed with air and supplied to the intake manifold of the internal combustion engine. An electronic control is provided for causing fuel injectors to inject the macroscopic liquid fuel droplets into the vacuum chamber at an appropriate time in its cycle and in relation to the position of the engine crankshaft.

### Background Art

It is well understood that the greater the vaporization or gasification of liquid fuel that can be accomplished the greater the surface area of the fuel which is subject to oxidation and therefore the higher the rate of combustion. Many individuals working in the field felt that if complete conversion of the fuel to the gaseous state could be accomplished, a highly efficient clean operating engine could be provided. Attempts to completely gasify liquid hydrocarbon fuel go back many years. However, all of these attempts have had significant shortcomings. In some instances, the devices did not completely vaporize the fuel and therefore the expected increase in efficiency did not materialize. In other cases, the devices were of such a complex nature as to negate any real benefit from them or require such high power inputs themselves that even though a greater fuel efficiency was realized, the increased power needs negated this benefit. The complete conversion of fuel to vapor created another unexpected problem. Although the fuel would rapidly and completely burn, it was discovered that the expansion of the fuel in forming a gas occurred too early. Therefore, the density of the fuel, when mixed with air was so low that not enough fuel could be directed into the combustion chambers of the engine to generate power equal to other state of the art devices such as carburetors, throttle body injection systems or direct port injection systems.

One of the most noted prior art devices which was developed by Charles Nelson Pogue in the 1930s was a carburetor for the vaporization of gasoline which has been widely advertised as the "two hundred mile per gallon carburetor". This device has never enjoyed wide commercial success because it is nearly as large and cumbersome as the engine it is meant to fuel and it requires an operating temperature which approaches the flash point of the fuel, such as gasoline, so that the potential for an explosion is quite great.

A device for vaporizing fuel, such as diesel fuel is disclosed in U.S. Patent No. 1,806,581 to Bethenod for "Fuel Supply System For Internal Combustion Engines of Variable Load For Using Heavy Fuels". The diesel fuel is supplied through a conventional gasoline carburetor and air is drawn through an intake by means of a vacuum pump. This system is an open system, i.e., air is continuously drawn in from the atmosphere by a first vacuum pump. A second vacuum pump is intended to pull a vacuum on the air-fuel mixture in a reservoir to vaporize the fuel whereupon it is fed into a manifold of an engine which is supplied with still an additional air intake. Heat exchange means are provided around the reservoir and again near the intake manifold to minimize fluctuations in fuel temperature. Because the system is open, large quantities of air are drawn through it making it very difficult to draw a sufficient vacuum to substantially vaporize any fuel which is not vaporized directly by the carburetor. In other words, for such a device to operate effectively it would be necessary to provide such a huge vacuum pump that the fuel savings, if any, would be negligible. Alternatively, with a smaller vacuum pump the fuel is not properly vaporized in an open system because atmospheric air is constantly being drawn into the system.

Another device for providing gaseous fuel to the carburetor of an internal combustion engine is shown in U.S. Patent No. 3,630,698 to Joseph H. Baldwin for "Fuel System". In this device, gaseous vapors are drawn from a vacuum chamber by means of a manifold vacuum. The vacuum chamber contains a supply of liquid fuel which is replenished through a float valve. Two potential problems are associated with this type of device. First, the vacuum from the manifold may not be sufficient under certain load conditions to provide sufficient fuel to the engine. Second, by drawing the gaseous vapors off of a body of liquid gasoline the lighter hydrocarbons are boiled off first, leaving a relatively heavy liquid hydrocarbon, frequently referred to as "strip oil". Therefore, in order to keep them working properly, means must be provided to regularly withdraw the strip oil and replace it with fresh gasoline.

Another device for vaporizing gasoline is disclosed in U.S. Patent No. 4,040,403 to Rose, et al. for "Air Fuel Mixture Control System". In this device, fuel is supplied to a vaporizer wherein the level of the liquid fuel in the vaporizer is controlled by a float valve. Hot exhaust gases from the engine are boiled through the liquid gasoline causing a portion of it to be vaporized and carried to the engine. The device includes a complex amplifying system for adjusting the air-fuel mixture and a separator for taking out any fuel droplets from the fuel as it is vaporized in the vaporizer. With this device, the lighter hydrocarbons will be vaporized leaving behind the heavier hydrocarbons or strip oil.

U.S. Patent No. 4,175,525 to Johnson for "Fuel Vaporizer System For Internal Combustion Engines" discloses a sealed vaporization system connected between a fuel supply line and the intake manifold of an internal combustion engine and operated in parallel with a carburetor. A float valve is provided in this device to control the flow of liquid fuel to a chamber wherein it is vaporized and fed to a carburetor. The lighter hydrocarbons will be boiled off the liquid fuel before the heavier hydrocarbons, leaving strip oil in the chamber.

Additional devices for vaporizing fuel are disclosed in U.S. Patent No. 4,483,305 for "Fuel Vaporization Device" to James E. Gilmor and U.S. Patent No. 4,483,307 for "Fuel Vaporization Device For Internal Combustion Engine", also to James E. Gilmor. These devices are designed to instantaneously vaporize all of the fuel.

U.S. Patent No. 4,522,183 to Meier et al. for "Method For Converting a Retrograde Substance to the Gaseous State" is directed to a method wherein the fuel is prepressurized and heated and the pressure released for abruptly converting a retrograde fuel to a gaseous state. While the method may be effective to accomplish its intended result, it is not believed that sufficient fuel can be provided to an internal combustion engine by the practice of this method to operate it satisfactorily, particularly under load.

The ultimate carburetion system would be one in which a small percentage of the fuel is vaporized and the rest of the fuel is converted to microscopic liquid fuel droplets prior to introducing the fuel into the intake manifold of an internal combustion engine. When mixed with air in the manifold the vaporized fuel and the microscopic fuel droplets disperse with some additional vaporization.

For convenience, gaseous fuel will be referred to as "vapor" or "vaporized fuel"; liquid fuel droplets of a size not visible with the naked eye, under normal lighting conditions, will be referred to as "microscopic" particles or droplets and liquid fuel droplets of a size which is visible with the naked eye will be referred to as "macroscopic" droplets. Ideally, macroscopic liquid fuel droplets from a suitable source, such as one or more fuel injectors, are converted to a mixture consisting of a small percentage of fuel vapor and a large percentage of microscopic fuel droplets. This mixture will be referred to as "converted fuel".

According to the invention, there is provided a device for converting a combustible liquid fuel into a combustible state and for supplying the converted fuel to a combustion chamber, comprising a vacuum chamber including a cylindrical housing having a first longitudinal axis with a liquid fuel inlet in said housing and a fuel outlet in said housing spaced from said inlet, said inlet being in the form of a fuel injector means for introducing macroscopic liquid fuel droplets into said vacuum chamber characterised in that an eccentrically mounted cylindrical rotor is mounted in said housing for rotation about a second longitudinal axis offset from said first axis, at least one radial slot being provided in said rotor and a generally rectangular vane being slidably received in said slot, said vane being urged outwardly against said housing when said rotor is rotated to convert said fuel from macroscopic droplets, fed into said chamber via said injector means, into converted fuel in the form of a mixture of microscopic liquid droplets and vaporised fuel, said injector means being controlled in response to the rotational position of said vane on the rotor relative to the location of the injector means in the vacuum chamber, a rotatably mounted rotor shaft being connected to the rotor for rotating the rotor within the housing, signal enabling means on said rotor shaft providing first periodic signal pulses responsive to the angular rotational position of said rotor shaft and engine sensor electronics being provided, responsive to input signals from engine sensors indicative of engine conditions, and further responsive to each first output signal pulse from said signal enabling means to provide an output signal to activate the injector means to provide a metered quantity of macroscopic fuel droplets to the vacuum chamber.

According to a second aspect of the invention, there is provided a device for converting a combustible liquid fuel into a combustible state and for supplying the converted fuel to a combustion chamber, comprising a vacuum chamber including a cylindrical housing having a first longitudinal axis with a liquid fluid inlet in said housing and a fuel outlet in said housing spaced from said inlet, said inlet being in the form of a fuel metering means for introducing macroscopic liquid fuel droplets into said vacuum chamber characterised in that an eccentrically mounted cylindrical rotor is mounted in said housing for rotation about a second longitudinal axis offset from said first axis, wherein said rotor has a surface which comes into near contact with an inner surface of said housing along a near contact line, lying in a common plane with said first longitudinal axis to form the vacuum chamber between said rotor and said inner surface at least one radial slot being provided in said rotor and a generally rectangular vane being slidably received in said slot, said vane being urged outwardly against said housing when said rotor is rotated to convert said fuel from macroscopic droplets, fed to said inlet, into converted fuel in the form of a mixture of microscopic liquid droplets and vaporised fuel, said inlet extending through said inner surface into communication with said vacuum chamber and being angularly spaced to the upstream side of said plane adjacent said contact line, said fuel outlet extending through said inner surface into communication with said vacuum chamber and being angularly spaced to the downstream side of said plane adjacent said contact line for discharging converted fuel, a plenum being connected to the outlet part for receiving converted fuel, an air intake being provided in said plenum at an angle to said outlet part for injecting air into said plenum and mixing it with the microscopic liquid particles, and means connecting said plenum with an air intake manifold for supplying a mixture of air and converted fuel to an engine.

According to a third aspect of the invention, there is provided a method of providing a converted fuel into the intake manifold of an engine comprising introducing macroscopic liquid fuel droplets into a closed vacuum chamber at ambient temperature, converting the fuel, discharging the converted fuel from the chamber, mixing the converted fuel with air to form an air-fuel mixture, introducing the air fuel mixture into the combustion chamber of an engine whereby said vacuum chamber converts the macroscopic liquid fuel droplets to gaseous fuel and microscopic liquid fuel droplets characterised in that the gaseous fuel and the microscopic liquid fuel droplets form converted fuel a smaller portion of which is vapour and a larger portion of which is microscopic liquid droplets.

For lubrication the inner surface of the housing may be coated with a lubricous material. This may be a polytetrafluoroethylene (PTFE) matrix such as Teflon®. Alternatively a sleeve may be used inside of the housing which is made of a polyamide, such as Torlon®. The vanes are made of a polyamide having a durometer or hardness which is less than that of the lining. If desired, spring means can be provided for urging the vanes outwardly against the housing wall. The vanes are arranged in opposing relationship and the spring means can include a pin positioned between opposite springs to urge the vanes against the housing wall.

More particularly, the rotor has a surface which comes into near contact, e.g., within 0.127mm (two-thousandth of an inch), with the cylindrical wall along a near contact line lying in a common plane with the axis of the rotor to form a vacuum chamber between the rotor and the cylindrical wall. A liquid fuel inlet in the form of a fuel injector can be mounted through one or both end walls in opposing relationship with each other. The single injector or the pair of injectors are angularly spaced within the vacuum chamber to the upstream side of the plane and as close to the near contact line as the introduction of fuel through the injectors will permit. Alternatively, the injectors can be mounted in the cylindrical wall of the housing in the same angular relationship. The converted fuel outlet extends through the cylindrical wall of the vacuum chamber into communication with an air-fuel mixing chamber just upstream of the near contact line.

The fuel injectors inject macroscopic droplets of liquid fuel through the inlets into the vacuum chamber where it is converted to microscopic fuel and vaporized fuel. This is accomplished by a combination of vacuum, expanding absorbed gases and water vapor in the macroscopic fuel droplets, and mechanical and heat energy from the action of the vacuum pump.

An air plenum has an air-fuel mixing chamber connected to the vacuum pump outlet port for receiving and mixing the converted fuel with air introduced through an air inlet port in the air plenum. An air intake passageway connects at one end of the mixing chamber to the air inlet port and is at substantially right angles to the converted fuel outlet from the vacuum chamber. An air-fuel discharge passageway is provided on the opposite side of the intake passageway for supplying the mixture of air and converted fuel to the manifold and then to the engine for combustion. The mixing chamber is larger in area than the intake passageway so that the air slows down as it passes through the mixing chamber creating a tumbling effect to allow for thorough mixing with the converted fuel. In addition, an optional diverter may be provided in the center of the mixing chamber to further create turbulent flow of the air to assure thorough mixing.

Additionally, an electronic fuel injector control is provided for selectively activating the fuel injectors for introducing macroscopic liquid fuel droplets into the vacuum chamber of the fuel conversion device. The control has a rotatably mounted rotor shaft connectable to the rotor in the vacuum chamber, and fuel conversion device signal means to provide first periodic signal pulses responsive to the angular rotational position of the rotor shaft. Engine sensor electronics is responsive to input signals from engine sensors indicative of engine condition and is further responsive to the output signal pulses from the fuel conversion device signal means. A signal pulse is provided each time a vane sweeps past the fuel injector. A sensor is provided which is responsive to the desired angular position of the engine crankshaft to provide second periodic signal pulses. An electric motor connected to the rotor shaft, when running, provides a blocking signal to the engine sensor electronics to block the first signal pulses from the fuel conversion device signal means so that the fuel injectors are activated only in response to the crankshaft pulses. The signal device for the fuel conversion device signal means can be an optical sensing device wherein a disk is mounted for rotation on the rotor shaft and has a pair of apertures adjacent its periphery spaced 180° apart and a light beam is directed toward the peripheral edge of the disk for transmission of a light beam through the apertures to activate a light switch in response to the correct position of the vanes within the vacuum chamber.

From the foregoing, the advantages of this invention are readily apparent. A very simple, and therefore economical, device has been provided for converting microscopic liquid fuel particles into converted fuel having the proper ratio of vaporized fuel and microscopic fuel particles. By use of vacuum, expanding absorbed gases, mechanical energy and thermal energy the converted fuel is formed. The converted fuel is mixed with air in a novel mixing chamber which causes thorough mixing with some additional evaporization and droplet breakup. Thus, the combustion of the fuel in the engine will be enhanced, thereby minimizing the amount of unburned hydrocarbons and maximizing fuel economy. By utilizing a lubricous material, the problems of lubricating the parts in a fuel-rich vacuum environment, wherein the lubricant would be dissolved and may vaporize, is minimized. Also the fuel injectors can be activated at the most advantageous time during the cycle of the fuel conversion device.

Additional advantages will become apparent from the description which follows, taken in conjunction with the accompanying drawings.

### Brief Description of the Drawings

Figure 1 is a fragmentary perspective view of a vehicle having the fuel conversion device of this invention installed therein;
Figure 2 is an enlarged side elevation of the fuel conversion device of this invention connected to the intake manifold of an internal combustion engine;
Figure 3 is an enlarged horizontal section, taken along line 3-3 of Figure 2, showing the fuel converter of this invention and associated drive mechanism therefor;
Figure 4 is a horizontal section, taken along line 4-4 of Figure 3, showing details of a one-way clutch and bearing mounts for the fuel converter;
Figure 5 is an enlarged horizontal section, taken along line 5-5 of Figure 4, showing details of the air-fuel mixing chamber and rotor;
Figure 6 is a horizontal section, taken along line 6-6 of Figure 5, showing additional details of the mixing chamber and rotor;
Figure 7 is a vertical section, taken along line 7-7 of Figure 5, showing further details of the mixing chamber;
Figure 8 is an exploded view of the rotor showing the vanes and associated parts;
Figure 9 is a diagrammatical view of the fuel converter of this invention connected to an internal combustion engine, showing typical electronic sensing devices to control the fuel converter;
Figure 10 is a fragmentary enlarged vertical section, similar to Figure 5, but showing the vane in the desired position for fuel injection;
Figure 11 is a diagrammatic perspective view of the fuel converting device of this invention showing the electronic fuel injector control;
Figure 12 is an enlarged fragmentary section, taken along line 12-12 of Figure 11 showing details of the optical sensor; and
Figure 13 is a fragmentary enlarged vertical section, similar to Figure 10, but showing the use of a single vane.

### Best Mode For Carrying Out the Invention

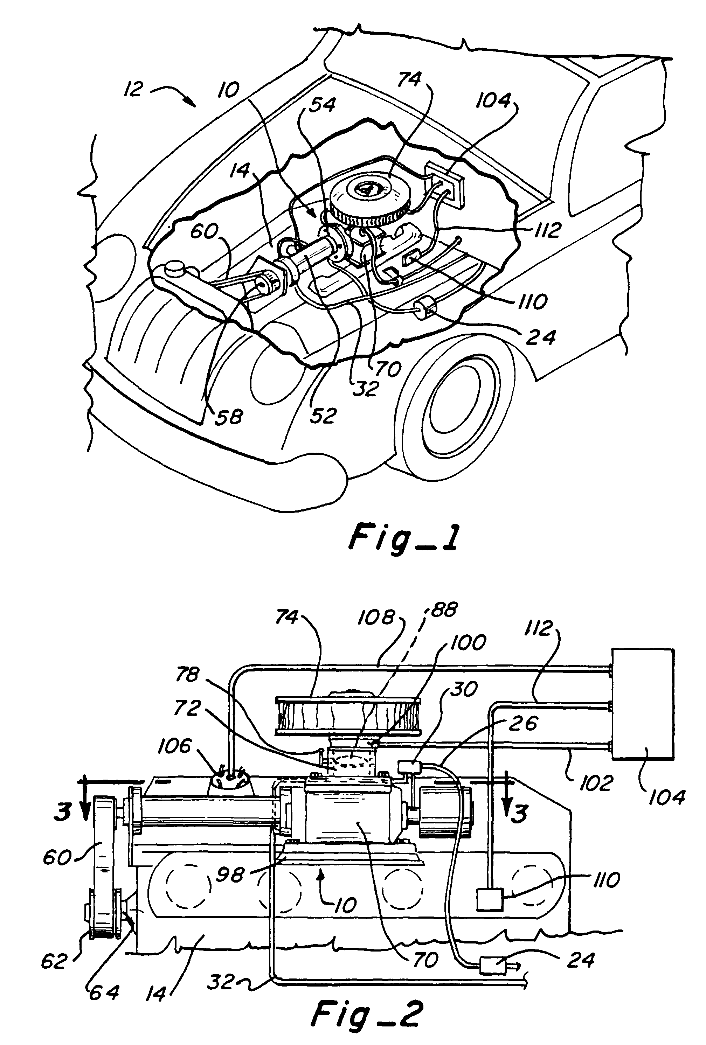

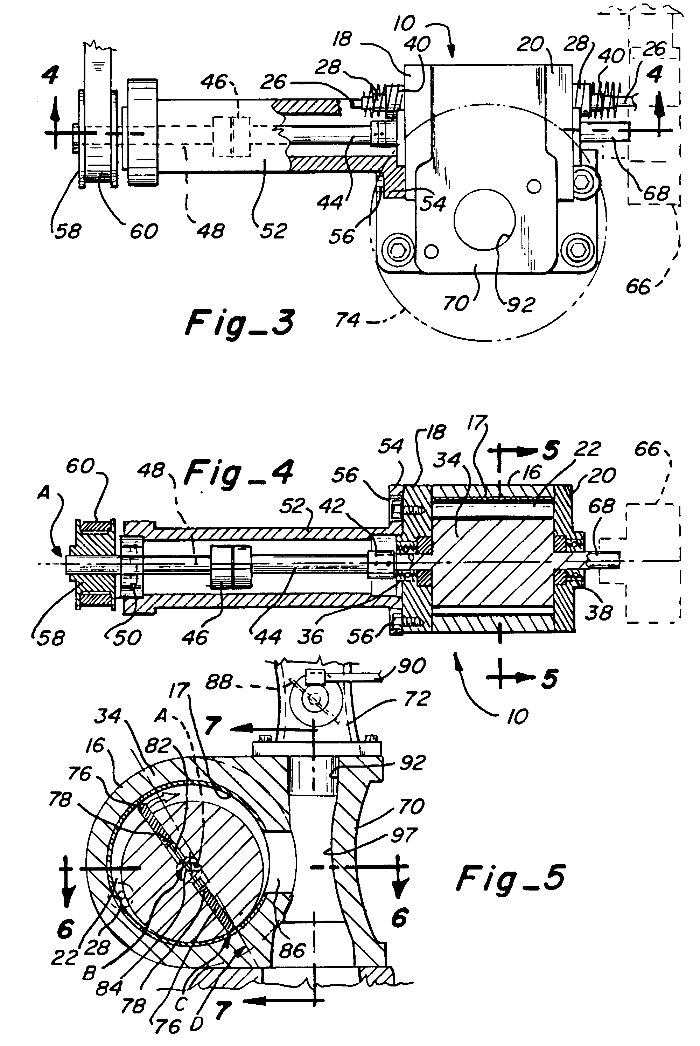

As illustrated in Figure 1, the fuel converter 10 of this invention is installed in a vehicle 12 adjacent the engine 14. The fuel converter includes a generally cylindrical housing 16 having a longitudinal axis A and opposed front end plate 18 and rear end plate 20, as shown in Figure 4, to form a vacuum chamber 22. Suitable lubrication within the vacuum chamber is a problem. Liquid lubricants, i.e., oils and greases, will not work because they will be dissolved and removed by the fuel and will tend to evaporate, particularly when gasoline is used as a fuel because of the higher temperatures. To overcome this, the housing has a lining 17 made from a lubricous material, such as a polyamide. One such polyamide which is suitable is Torlon®.
Alternatively, a PTFE coating, such as a Teflon® matrix can be used. Fuel is supplied by means of a fuel pump 24 through a fuel line 26 to fuel atomizing devices, such as fuel injectors 28. A fuel pressure regulator 30 is located in return fuel line 32 for returning fuel which is not used by the fuel injectors to the fuel tank (not shown).

Rotor 34, shown in Figure 4, is journaled in a front bearing 36 mounted in front end plate 18 and a rear bearing 38 mounted in rear end plate 20. The rotor is mounted for rotation about a longitudinal axis B spaced laterally from housing axis A as best seen in Figures 4 and 5. The rotor makes near contact with the housing wall 16 along line C. In one form of the invention, the spacing along line C is approximately 0.0254mm (one-thousandth of an inch). Conveniently, the heat generated by these bearings during operation of the fuel converter 10 will heat the end plates and the respective injectors 28 to preheat the fuel before it passes into vacuum chamber 22. Also, heating coils 40 can be provided around each fuel injector 28 to pre-heat the fuel for cold starts when the ambient temperature is extremely low. Alternatively, heating coils (not shown) could be provided in the walls or ends of vacuum chamber 22 to reheat the fuel. The injectors 28 lie on the upstream side of a plane D formed by axis A and line C and as near to line C as is possible and still inject the fuel. The reason for this is so the fuel remains in the vacuum chamber as long as possible to more greatly facilitate the formation of converted fuel.

The rotor 34 is connected by coupling 42 to a driven shaft 44. The forward end of driven shaft 44 is connected through a one-way slip clutch 46 to a drive shaft 48. This drive shaft is supported in bearing 50 at the forward end of cylindrical housing 52. The other end of housing 52 is provided with a flange 54 attached to front end plate, as by bolts 56 spaced around the periphery thereof. Drive shaft 48 is driven by pulley 58 which in turn is driven by belt 60 driven from pulley 62 attached to pully shaft 64 of engine 14, as best seen in Figure 2.

During cold weather, the starter motor of the vehicle may not turn the engine and the fuel converter 10 at sufficient speed to create sufficient vacuum to convert the fuel from macroscopic liquid droplets to vapor and microscopic liquid particles at a sufficient rate to start the engine. Therefore, if required, an electric motor 66 can be mounted behind the fuel converter 10 which will be operated directly off the battery (not shown) to drive the rotor through a stub shaft 68 connected thereto at a much higher speed so that enough fuel will be converted and supplied to the engine to start it. This is possible because one-way clutch 46 allows driven shaft 44 and rotor 34 to turn faster than drive shaft 48. By way of example, electric motor 66 may rotate rotor 34 at 750 rpm or more while the engine is turning at 150 rpm during starting. After starting, electric motor 66 will be turned off and the engine and rotor will rotate at the same speed.

After conversion, the fuel passes from vacuum chamber 22 into a plenum 70 where it is mixed with air supplied through conduit 72 so that the air flow is at right angles to the converted fuel to assure maximum mixing as more fully described below. Conveniently, the air is drawn through a filter 74, connected to the other end of conduit 72.

Turning now to Figures 5-9, the rotor 34 has a plurality of vanes, such as two opposed vanes 76 which are urged apart as by a pair of leaf springs 78 received in recesses 80 of the vanes. A pin 82 has opposite ends bearing against leaf springs 78 and reciprocated within passageway 84 extending through rotor 34 between vanes 76. The vanes are coated with the same lubricous material as the housing liner, but having a lesser hardness or durometer than the housing liner. This assures that most of the wear that occurs will be along the edge of the vanes, which can be easily replaced. As can be seen, with rotor 34 mounted for rotation eccentrically wit: respect to housing 16, the vanes will be urged against the inner surface of the housing but will move reciprocally back and forth as the rotor rotates. Since the spacing of the two vanes remains substantially constant, there will be little flexure of springs 78 and therefore the chance of failure of the springs through extended use is very minimal. In fact, when the pump is in operation centrifugal force will hold the vanes outwardly. However, for starting purposes it is desirable to have the springs in place to keep the vanes extended. With the use of starter motor 66, for most applications springs 78 and pin 82 may not be needed since the centrifugal force on the vanes created when motor 66 is energized may be sufficient. The fuel injected into vacuum chamber 22 as macroscopic liquid fuel droplets is converted to vapor and microscopic fuel particles which are moved around the chamber by the vanes and discharged through a pair of outlet ports 86, located downstream of plane D.

As best understood at the present time, a number of forces act upon the macroscopic liquid fuel droplets introduced by the fuel injectors. These are:
1. Vacuum, which is a direct result of the vacuum environment of the device, causes rapid vaporization of fuel from the surface of the droplets thereby causing some reduction in the sizes of all droplets.
2. Absorbed gas expansion, which also is a direct result of the vacuum environment of the device, caused absorbed gases such as nitrogen, oxygen, water vapor and other atmospheric gases to expand within the macroscopic droplets blowing them apart into smaller microscopic droplets thereby exposing more surface area for further boiling off of liquid fuel from the microscopic droplets. Evaporization alone is not sufficient to cause both significant vaporization and droplet size reduction, particularly with less volatile fuels such as alcohols and alcohol mixtures. The vaporization is a self-limiting process because the evaporation process absorbs heat from the droplets which rapidly reduces their temperatures such that the evaporation rate rapidly decreases to an insignificant level. The absorbed atmospheric gases and most volatile species of the fuel rapidly expand causing eruptive boiling of the droplets breaking them into much smaller droplets.
3. Mechanical energy from vanes, rotor and housing agitate the macroscopic liquid droplets to distort and spread them out and break the surface tension within the droplets to further release absorbed gases.
4. Heat energy from contact with vanes, rotor and housing raises the temperature of liquid droplets to enhance vaporization and expansion and release of absorbed gases.

The foregoing explanation is believed to be accurate, to the extent that the forces acting upon the fuel droplets are understood at the present time. However, it should be understood that there may be additional forces acting on the droplets and/or the magnitude of the effect of the forces described above may be greater or lesser than presently understood.

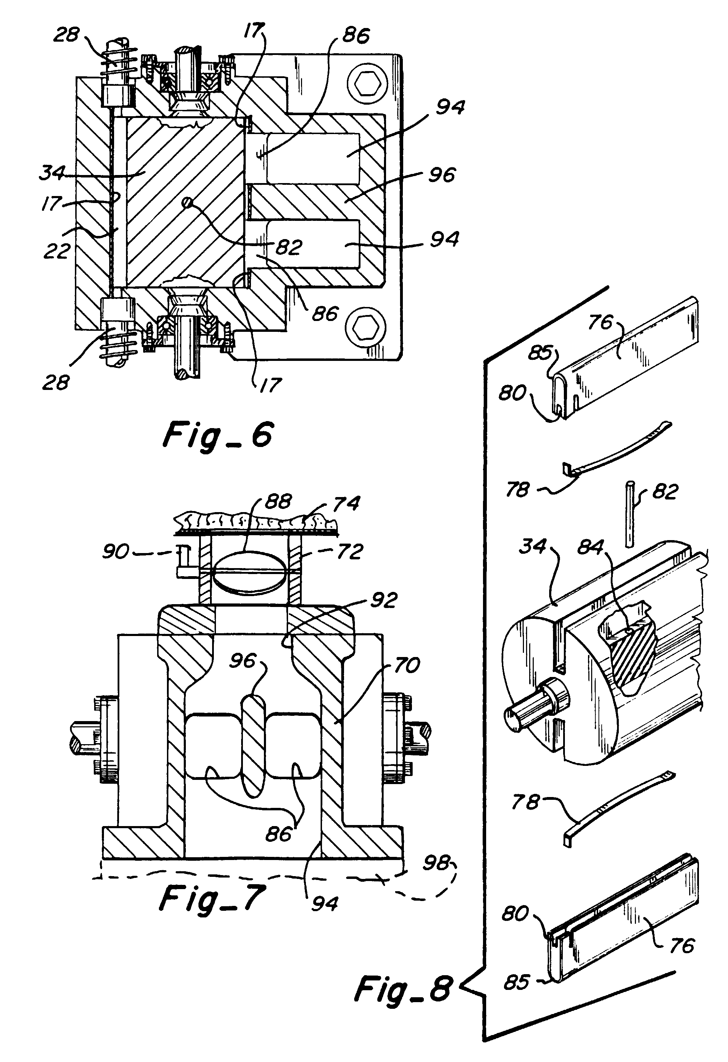

Turning to Figure 7, air flows through conduit 72 past a butterfly valve 88 controlled through a butterfly linkage 90 connected to the accelerator (not shown). This intake air passes through a throat 92 in plenum 70 and into a larger mixing chamber 94 which includes outlet ports 86 from vacuum chamber 22 and also a center dividing wall 96 between outlet ports 86 and curved wall 97 opposite ports 86. Thus, as the air moves from throat 92 into larger chamber 94, its flow will slow down. The dividing wall 96 and curved wall 97 cause turbulence in the air so that it mixes thoroughly with the gaseous fuel and microscopic fuel particles being discharged into chamber 94 from discharge openings 86 which are at an angle, such as a right angle, to the flow of air through chamber 94. The relatively warm air which is mixed with the fuel will heat the microscopic fuel droplets causing additional evaporation and droplet size reduction. By injecting the converted fuel into the air at right angles, good mixing of the air and fuel is assured which will improve the burning of the fuel in the cylinders of the engine. Thus, a very efficient and clean burn is assured.

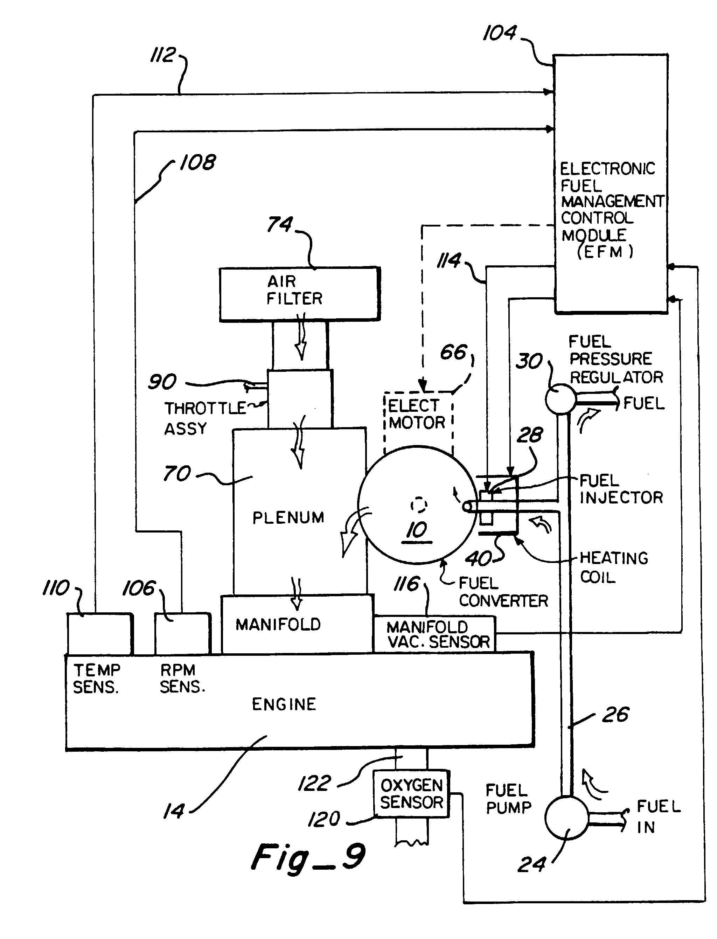

As best seen in Figure 9, an electronic fuel management (EFM) control module 104 is provided. This control module receives various signals from RPM sensor 106 mounted on engine 14 through a wire 108. A temperature sensor 110 on engine 14 provides a signal through wire 112 to the control module. The control module processes these signals and provides a signal through wire 114 to fuel injectors 28, which provides fuel to the converter in accordance with the parameters sensed by the control module. Thus, if butterfly valve 88 is opened to provide more air to the engine, the manifold pressure sensor 116 will provide a signal to control module 104 which will cause the control module to send a signal through wire 114 to the fuel injectors to open them further to provide more fuel to fuel converter 10. When the butterfly valve 88 is closed due to releasing the accelerator, the reverse will occur. The temperature sensor 110 is provided for cold starts with some fuels. It provides further input to the control module for regulating the fuel injection when the engine is initially started. A suitable system has been found, an engine management system manufactured by Digital Fuel Injection Incorporated at 37732 Hills Tech Drive, Farmington Hills, Michigan 48331, which has external program capabilities to adjust fuel ratio across the entire range, for various fuels. Also, most original equipment automobile manufacturers' management systems can be modified to manage the fuel converter of this invention.

Additionally, a manifold vacuum sensor 116 is connected to control module through wire and an oxygen sensor 120 on engine tailpipe 122 is connected by wire to control module 104. Many other sensors (not shown) may be provided to measure other engine conditions or functions for electronic fuel management.

As of the date of this application, applicant's fuel conversion device has only been operated at an elevation of approximately 1524m (5,000 ft) above sea level. Thus, the parameters set forth below are for this elevation and would vary at either higher or lower elevations in accordance with well-known physical laws. In a fuel conversion device wherein the vacuum chamber 22 is formed within the housing 16 which has an interior diameter of 58mm (2.60 inches) and a length of 76mm (3.00 inches) and the diameter of rotor 34 is 63mm (2.50 inches). When the rotor is rotating at an idle speed of between 700 and 750 rpm, the device draws a minium pressure of approximately 33.86 kPa (254mm (10 inches) of mercury) at an ambient temperature of 27°C (80°F) before introduction of fuel. At operating speeds between 1700 and 2000 rpm, after fuel is introduced in sufficient quantity to operate the engine at these speeds, the device stabilized at a minimum of approximately 40.64 kPa (305mm (12 inches) of mercury). At these speeds and at ambient temperatures of between 7°C and 27°C (45°F and 80°F ) the device will produce at the outlet converted fuel, a smaller portion of which is vapor, and a larger portion of which is microscopic liquid droplets. As the microscopic fuel droplets move through the vacuum chamber, the mixing chamber and the manifold, additional microscopic fuel droplets are vaporized as previously described.

By way of example, vacuum chamber 22, of the size described above, is connected to mixing chamber 94, wherein throat 92 has a diameter of 38mm (1.50 inches) and an outlet into the manifold of 48mm (1.90 inches). The outlet ports 86 which communicate the vacuum chamber with the mixing chamber each are 27mm (1.0625 inches) wide by 35mm (1.375 inches) high. The dividing wall 96 is 49mm (1.9375 inches) long and 12.7mm (0.50 inches) wide.

The invention has been described as utilizing a single vacuum pump with an engine. However, it is contemplated that a very small vacuum pump could be used to supply fuel to each cylinder to the engine for some applications.

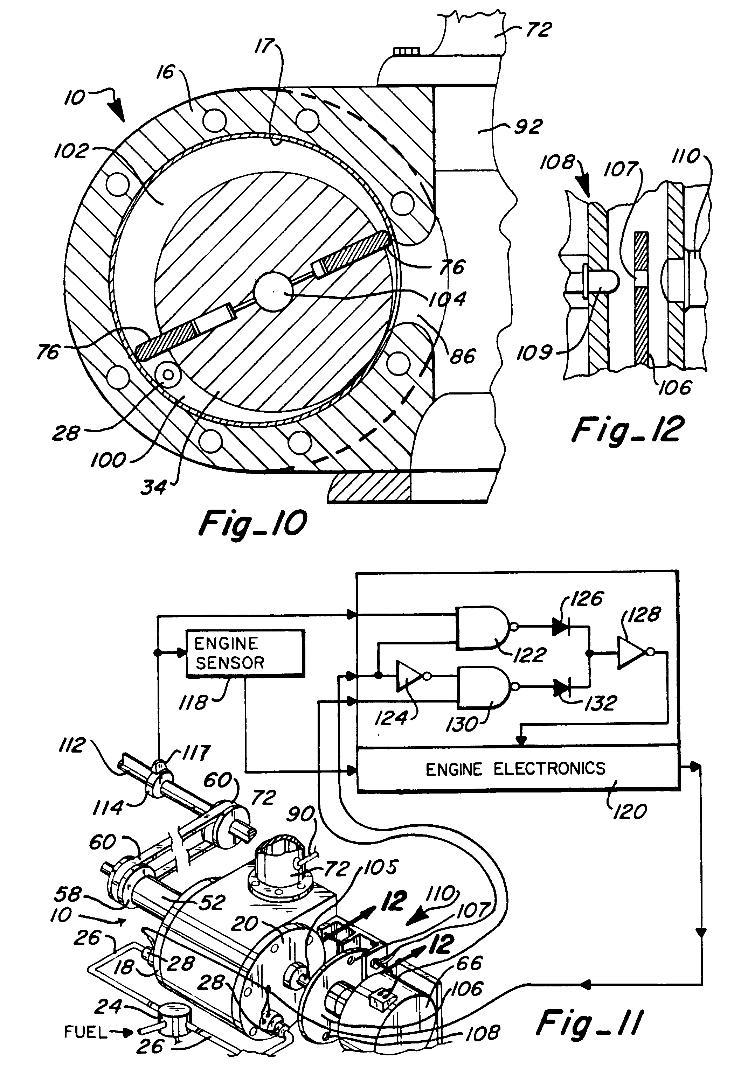

It is important for the most efficient operation of the fuel converter 10 that fuel injectors 28 be activated at an appropriate time during the rotation of rotor 34 and its associated vanes 76. This appropriate time is just after the trailing edge of one of the vanes 56 has swept past fuel injectors 28, such as the position shown in Figure 10. At this point in the rotation of rotor 34, the fuel will be introduced into an intake area 100 just before converted fuel is discharged from discharge area 102 which is the area bounded by the leading edge of that same vane and the trailing edge of the opposite vane. By injecting the fuel at that this point, the physical time that the fuel is in fuel converter 10 is maximized so that as much fuel as possible can be converted from macroscopic fuel droplets to microscopic fuel droplets and fuel vapor in accordance with the process described above. This becomes more and more important with increased engine and fuel converter speed because the greater the RPM of the fuel converter 10, the shorter the time duration for the fuel to be present in fuel converter 10 to be converted during each rotation.

As shown in Figure 11, electric motor 66 is connected to the rotor by means of a rotor shaft 104. Intermediate the ends of shaft 105 is a disk 106 having a pair of apertures 107 and 108 adjacent the periphery thereof and spaced 180° apart. Disk 106 is fixedly attached to shaft 105 and is oriented so that apertures 107 and 108 are aligned with the position of vanes 76 within fuel converter 10. An optical switch device 110 is provided which encircles one edge of the disk so that when an aperture is aligned therewith, the device projects a light beam by means of light 109 through the aperture to enable an optical switch 110 to provide an electrical output pulse. Although an optical switch device 110 has been illustrated, it will be understood that the same objective could be accomplished by use of magnetic elements on the disks spaced 180° apart which are sensed by a magnetic sensing device adjacent the disk. Also, devices that utilize the Hall Effect or mechanical devices could be used as well as one skilled in the sensing art will recognize.

The engine crankshaft 112 has magnetic coding or other indicia 114 thereon which provides a signal during each revolution to sensor 117 which provides a crankshaft output pulse signal each time the crankshaft is in the correct rotational position whereby the engine cylinders are properly located for accepting fuel. Conveniently, sensor 116 is one of many engine sensors 118 that provide signal inputs to the engine electronics 120 which in turn provides an appropriate output signal to the fuel injectors 28.

With conventional fuels, such as gasoline, electric motor 66 may not be necessary. However, for cold starts with alternative fuels, such as ethanol and methanol, it may be necessary to spin the fuel converter 10 by means of motor 66 at high RPMs, such as 3500 RPMs, compared to the 300 to 500 RPMs of the engine obtained from the engine starter motor (not shown). This is required in order to get enough fuel to the engine for initial ignition under cold start conditions. Under such conditions when the starter button (not shown) for the engine is depressed the starter motor and the electric motor will be energized simultaneously. During the operation of electric motor 66 a steady signal will be provided to AND gate 122 and to an invertor 124. Thus, every time there is a crankshaft output pulse signal from sensor 117, AND gate 122 will be activated to provide a signal to diode 126 which is fed through amplifier 128 to the engine electronics 120. Every time there is a pulse from sensor 117, engine electronics 120 will fire or activate fuel injectors 28. Since there will be no signal from invertor 124 to AND gate 130 the output pulse signal from optical switch 110 is inhibited by AND gate 130.

Once the engine has started, electric motor 66 will stop running and the output signal from it will cease. This will inhibit AND gate 122 but now invertor 124 will provide a signal to AND gate 130 which will provide an output signal every time there is a pulse from optical switch 110. This output signal will activate diode 132 which will provide a signal through amplifier 128 to engine electronics 120. Thus, the output from engine electronics 120 for firing injectors 28 will occur each time there is a signal from optical switch 110 indicating that the rotor 34 and associated vane 76 are in the position shown in Figure 10. Under normal operating conditions, the fuel will be injected into fuel converter 10 as early in its cycle as possible to allow maximum time for the fuel conversion to take place before fuel is discharged through discharge opening 86.

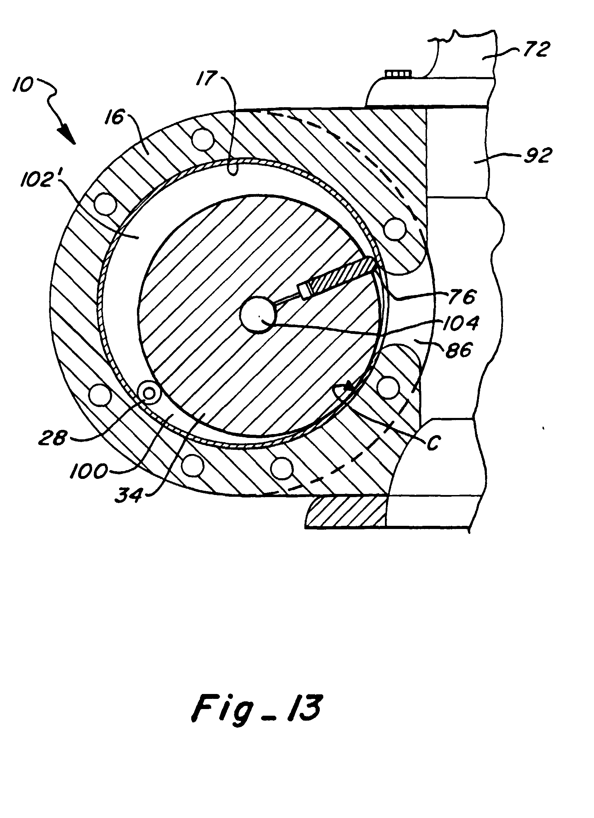

As best seen in Figure 13, an alternative embodiment is disclosed having only a single vane 76. In all other respects, this embodiment is the same as the previous embodiment. Vane 76 may be provided with a spring, if necessary, for the particular application or it may be omitted, if not needed. The advantage of this arrangement is that the near contact line C serves the function of one vane and then a single vane 76 can be used which creates a larger area 102' for expansion of the fuel. In other words, the area 102' will extend from contact line C downstream to the position of vane 76 shown in Figure 13. In this position, area 102' has its maximum volume, just before discharge of the converted fuel through outlet 86 as vane 76 sweeps passed this outlet. Of course, the injection of fuel through one or more fuel injectors 28 must be timed so that no fuel is injected during the sweep of vane 76 fron the position shown in Figure 13 until it sweeps passed fuel injector 28.

From the foregoing, the advantages of this invention are readily apparent. A fuel converter has been provided in the form of a vacuum pump into which liquid fuel is injected in the form of macroscopic liquid particles in metered quantities into a vacuum chamber. The internal components of the vacuum chamber are made of or coated with a lubricous material. A portion of the fuel is vaporized into gaseous fuel and the rest is converted into microscopic liquid particles. This fuel is moved from the inlet to the outlet ports by sweeping vanes.

After passing through the outlets, the fuel is mixed with air in a plenum wherein the fuel enters a plenum at substantially right angles to the direction of the fuel to assure thorough mixing. The plenum opens from a narrower throat into a larger mixing chamber which contains a dividing wall. This causes the air and fuel to mix thoroughly before it is introduced into the manifold and engine. By use of vacuum, expanding absorbed gases, mechanical energy and thermal energy the converted fuel is formed. The converted fuel is mixed with air in a novel mixing chamber which causes evaporation and expansion of additional fuel droplets. The entire system is operated by an electronic fuel management control module which receives numerous signals to provide information which is assimilated in the control module and provides an output signal to the fuel metering device to control the amount of fuel introduced into the pump.

## Claims

1. A device for converting a combustible liquid fuel into a combustible state and for supplying the converted fuel to a combustion chamber, comprising a vacuum chamber (22) including a cylindrical housing (16) having a first longitudinal axis (A) with a liquid fuel inlet in said housing and a fuel outlet (86) in said housing spaced from said inlet, said inlet being in the form of a fuel injector means (28) for introducing macroscopic liquid fuel droplets into said vacuum chamber (22) characterised in that an eccentrically mounted cylindrical rotor (34) is mounted in said housing (16) for rotation about a second longitudinal axis (B) offset from said first axis (A), at least one radial slot being provided in said rotor (34) and a generally rectangular vane (76) being slidably received in said slot, said vane (76) being urged outwardly against said housing (16) when said rotor (34) is rotated to convert said fuel from macroscopic droplets, fed into said chamber (22) via said injector means (28), into converted fuel in the form of a mixture of microscopic liquid droplets and vaporised fuel, said injector means (28) being controlled in response to the rotational position of said vane (76) on the rotor (34) relative to the location of the injector means (28) in the vacuum chamber (22), a rotatably mounted rotor shaft (44) being connected to the rotor (34) for rotating the rotor within the housing (16), signal enabling means (106) on said rotor shaft (44) providing first periodic signal pulses responsive to the angular rotational position of said rotor shaft (44) and engine sensor electronics (104) being provided, responsive to input signals from engine sensors (110,116,117) indicative of engine conditions, and further responsive to each first output signal pulse from said signal enabling means (106) to provide an output signal to activate the injector means (28) to provide a metered quantity of macroscopic fuel droplets to the vacuum chamber (22).

2. Apparatus as claimed in claim 1, wherein said signal enabling means (106) provides said first signal pulses each time said at least one vane (76) sweeps past the injector (28).

3. Apparatus as claimed in claim 1, further including a sensor (117) responsive to a desired angular position of the crankshaft indicating that the engine cylinders are in optimum position for receiving a fuel charge, said sensor providing second periodic signal pulses and being one of the engine sensors, and an electric motor (66) connected to said rotor shaft (44) for optional use during engine start-up, said motor (66) providing a blocking signal, when said motor is running, to said engine sensor electronics to block said first signal pulses so that the fuel injectors (28) are activated only in response to said second periodic signal pulses.

4. Apparatus as claimed in claim 1, wherein said signal enabling means includes a disk (106) mounted for rotation with said rotor shaft (44), said disk (106) having a pair of spaced signal facilitating means (107,108) adjacent the periphery of said disk (106) spaced 180° apart, an sensing means mounted adjacent said periphery of said disk (106) for producing said first periodic signal pulse each time said signal facilitating means passes (107,108) said sensing means (110).

5. Apparatus as claimed in claim 1, wherein said signal enabling means includes optical sensing means (110).

6. Apparatus as claimed in claim 4, wherein said spaced signal facilitating means (107,108) comprise a pair of apertures adjacent the periphery of said (106) disk spaced 180° apart, light beam producing means (109) being mounted adjacent one side of said periphery of said disk (106) for directing a beam of light through said apertures (107,108) each time they become aligned with said light producing means (109), and a light switch (110) mounted on the opposite side of said periphery of said disk (106) for producing said first periodic signal pulse each time the light beam passes through said aperture (107,108).

7. Apparatus as claimed in any preceding claim, wherein said housing (16) has an inner surface contacted by said vane (76), said vane (76) and said surface being made of a lubricous material.

8. Apparatus as claimed in claim 7, wherein said inner surface of said housing (16) and said vane (76) are coated with a polyamide or polytetrafluoroethylene.

9. Apparatus as claimed 1, further including spring means (78) for urging said vane (76) outwardly against said housing inner surface.

10. Apparatus as claimed in claim 9, wherein said rotor has a pair of slots arranged on opposite sides thereof and a pair of vanes (76) are arranged in opposed relationship in said respective slots; and at least one spring (78) is positioned between said opposed pairs of vanes (76) to urge said vanes (76) against said housing inaner surface.

11. Apparatus as claimed in claim 1, wherein said rotor (34) has a surface which comes into near contact with an inner surface of said housing (16) along a near contact line (C) lying in a common plane with said first longitudinal axis (A) to form a vacuum chamber (22) between said rotor (34) and said inner surface, the liquid fuel inlet (28) extending through said inner surface into communication with said vacuum chamber (22) and being angularly spaced to the upstream side of said plane adjacent said contact line (C), said fuel outlet (86) extending through said inner surface into communication with said vacuum chamber (22) and being angularly spaced to the downstream side of said plane adjacent said contact line (C) for discharging converted fuel.

12. A device for converting a combustible liquid fuel into a combustible state and for supplying the converted fuel to a combustion chamber, comprising a vacuum chamber (22) including a cylindrical housing (16) having a first longitudinal axis (A) with a liquid fluid inlet in said housing and a fuel outlet (86) in said housing spaced from said inlet, said inlet being in the form of a fuel metering means for introducing macroscopic liquid fuel droplets into said vacuum chamber (22) characterised in that an eccentrically mounted cylindrical rotor (34) is mounted in said housing (16) for rotation about a second longitudinal axis (B) offset from said first axis (A), wherein said rotor (34) has a surface which comes into near contact with an inner surface of said housing (16) along a near contact line (C), lying in a common plane with said first longitudinal axis (A) to form the vacuum chamber (22) between said rotor (34) and said inner surface at least one radial slot being provided in said rotor and a generally rectangular vane (76) being slidably received in said slot, said vane (76) being urged outwardly against said housing (16) when said rotor (34) is rotated to convert said fuel from macroscopic droplets, fed to said inlet (28), into converted fuel in the form of a mixture of microscopic liquid droplets and vaporised fuel, said inlet (28) extending through said inner surface into communication with said vacuum chamber (22) and being angularly spaced to the upstream side of said plane adjacent said contact line (C), said fuel outlet (86) extending through said inner surface into communication with said vacuum chamber (22) and being angularly spaced to the downstream side of said plane adjacent said contact line (C) for discharging converted fuel, a plenum (70) being connected to the outlet part (86) for receiving converted fuel, an air intake being provided in said plenum (70) at an angle to said outlet part (86) for injecting air into said plenum (70) and mixing it with the microscopic liquid particles, and means connecting said plenum (70) with an air intake manifold for supplying a mixture of air and converted fuel to an engine.

13. A device as claimed in claim 12, further including an electronic fuel management control module (104) for controlling the fuel injected by the fuel metering means.

14. A device as claimed in claim 12, wherein said plenum (70) includes a throat (92) forming said air intake, a chamber (94) adjacent said outlet (86) communicating with said throat (92) and having a greater volume than said throat (92) for mixing the air and fuel.

15. A device as claimed in claim 14, further including a dividing wall (96) in said chamber (94) to divide the flow of air from said throat (92) through said plenum (70), said outlet (86) being substantially bisected by said dividing wall (96) to create turbulence of the air passing through said chamber (94) to enhance mixing thereof with the converted fuel.

16. A device as claimed in claim 15, wherein said mixing chamber (94) further includes a curved wall (97) opposite said outlet port (86) to further mix the air and converted fuel.

17. A method of providing a converted fuel into the intake manifold of an engine comprising introducing macroscopic liquid fuel droplets into a closed vacuum chamber (22) at ambient temperature, converting the fuel, discharging the converted fuel from the chamber (22), mixing the converted fuel with air to form an air-fuel mixture, introducing the air fuel mixture into the combustion chamber of an engine whereby said vacuum chamber (22) converts the macroscopic liquid fuel droplets to gaseous fuel and microscopic liquid fuel droplets characterised in that the gaseous fuel and the microscopic liquid fuel droplets form converted fuel a smaller portion of which is vapour and a larger portion of which is microscopic liquid droplets.

18. A method as claimed in claim 17, wherein the vacuum chamber (22) has an eccentrically mounted rotor (34) within a cylindrical housing (16) and a liquid fuel inlet (28) in the housing and a fuel outlet (86) in the housing offset from the inlet (28).

19. A method as claimed in claim 17, wherein the air is introduced to the converted fuel substantially at right angles thereto to assure substantially complete mixing of the converted fuel and air before entering the engine.

20. A method as claimed in claim 19, including the further step of using air flow during the mixing step to create a positive flow of the mixture into the combustion chamber.

21. A method as claimed in claim 19, including the further step of heating the chamber.

22. A method, as claimed in claim 21, wherein said heating step is accomplished by the frictional resistance of the moving parts within the chamber.

23. A method as claimed in any one of claims 17 to 22, wherein said fuel is alcohol or other hard starting fuel.

24. A method as claimed in claim 17, wherein said converting step includes using vacuum to increase the evaporation rate of liquid fuel droplets to vaporize some of the fuel, expanding and releasing absorbed gases from the macroscopic liquid fuel droplets to blow them apart and breakup into microscopic liquid fuel droplets, using mechanical energy to agitate the macroscopic liquid fuel droplets to break surface tension within the droplets to release additional absorbed gases, and using heat energy to raise the temperature of liquid fuel droplets to enhance vaporization and expansion and release of absorbed gases.

25. A method as claimed in any one of claims 17 to 24, wherein the vacuum chamber (22) is cylindrical, an eccentrically mounted rotor (34) being rotatable within said chamber (22)and being provided with at least one vane (76), at least one fuel injector (28) being provided for introducing said macroscopic liquid fuel droplets into said chamber (22), the method comprising sensing the rotational position of the vane (76), sensing the rotational position of a crankshaft of an associated engine and activating fuel injectors (28) when both the vanes (76) and the crankshaft are in a desired position.

26. A method as claimed in claim 25 comprising sensing the rotational position of the vanes (76), sensing the rotational position of the crankshaft, activating an electric motor (66) during start-up to rotate the rotor (34), providing a blocking signal in response to activation of the electric motor (66) to inhibit the sensing of the rotational position of the vane (76), and activating the fuel injectors (28) only in response to the rotational position of the crankshaft.

## Patentansprüche

1. Vorrichtung zum Umwandeln eines brennbaren Flüssigkraftstoffes in einen brennbaren Zustand und zum Zuführen des umgewandelten Kraftstoffes zu einem Brennraum, der eine Vakuumkammer (22) umfaßt, die ein zylindrisches Gehäuse (16) einschließt, das eine erste Längsachse (A) aufweist mit einem Flüssigkraftstoffeinlaß in dem Gehäuse und ein Kraftstoffauslaß (86) in dem Gehäuse, der von dem Einlaß beabstandet ist, wobei der Einlaß in Form einer Einspritzventileinrichtung (28) zum Einführen makroskopischer Flüssigkraftstofftröpfchen in die Vakuumkammer (22) ausgebildet ist, **dadurch gekennzeichnet**, daß ein exzentrisch montierter zylindrischer Rotor (34) in dem Gehäuse (16) zur Drehung um eine zweite Längsachse (B), die von der ersten Achse (A) versetzt ist, montiert ist, wobei zumindest ein radialer Schlitz in dem Rotor (34) vorgesehen ist und ein im allgemeinen rechteckiger Flügel (76) verschiebbar in dem Schlitz aufgenommen wird, wobei der Flügel (76) gegen das Gehäuse (16) nach außen gedrückt wird, wenn der Rotor (34) gedreht wird, um den Kraftstoff aus makroskopischen Tröpfchen, die in die Kammer (22) über die Einspritzventileinrichtung (28) geführt wird, in einen umgewandelten Kraftstoff in Form eines Gemisches von mikroskopischen Flüssigkeitströpfchen und verdampftem Kraftstoff umzuwandeln, wobei die Einspritzventileinrichtung (28) im Ansprechen auf die Drehposition des Flügels (76) auf dem Rotor (34) relativ zu der Stellung der Einspritzventileinrichtung (28) in der Vakuumkammer (22) gesteuert wird, wobei eine drehbar montierte Rotorwelle (44) mit dem Rotor (34) zum Drehen des Rotors innerhalb des Gehäuses (16) verbunden ist, wobei eine Signalermöglichungseinrichtung (106) auf der Rotorwelle (44), die erste periodische Signalimpulse im Ansprechen auf die Drehwinkelposition der Rotorwelle (44) erzeugt und eine Motorsensorelektronik (104), die auf die Eingangssignale von den Motorsensoren (110, 116, 117) ansprechen, die die Motorzustände angeben, und die außerdem auf jeden ersten Ausgangssignalimpuls von der Signalermöglichungseinrichtung (106) ansprechen, um ein Ausgangssignal zum Aktivieren der Einspritzventileinrichtung (28) zu erzeugen und um eine dosierte Menge von makroskopischen Kraftstofftröpfchen zu der Vakuumkammer (22) zu schaffen, vorgesehen sind.

2. Vorrichtung nach Anspruch 1, wobei die Signalermöglichungseinrichtung (106) die ersten Signalimpulse jedesmal erzeugt, wenn zumindest ein Flügel (76) an dem Einspritzventil (28) vorbeiläuft.

3. Vorrichtung nach Anspruch 1, die außerdem einen Sensor (117) einschließt, der auf eine gewünschte Winkelposition der Kurbelwelle anspricht, die angibt, daß die Motorzylinder in einer optimalen Position zum Empfangen einer Kraftstoffüllung befindlich sind, wobei der Sensor zweite periodische Signalimpulse erzeugt und einer der Motorsensoren ist, und einen Elektromotor (66) einschließt, der mit der Rotorwelle (44) zur optionalen Verwendung während des Motoranlassens verbunden ist, wobei der Motor (66) ein Blockierungssignal, wenn der Motor läuft, zu der Motorsensorelek-tronik abgibt, um die ersten Signalimpulse zu sperren, so daß die Einspritzventile (28) nur im Ansprechen auf die zweiten periodischen Signalimpulse aktiviert werden.

4. Vorrichtung nach Anspruch 1, wobei die Signalermöglichungseinrichtung eine Scheibe (106) einschließt, die zur Drehung mit der Motorwelle (44) montiert ist, wobei die Scheibe (106) ein Paar beabstandeter Signalauslöseeinrichtungen (107, 108) benachbart zu dem Umfang der Scheibe (106) und 180° voneinander beabstandet aufweist, und eine Abtasteinrichtung einschließt, die benachbart zu dem Umfang der Scheibe (106) montiert ist zum Erzeugen des ersten periodischen Signalimpulses jedesmal dann, wenn die Signalauslöseeinrichtung (107, 108) an der Abtasteinrichtung (110) hindurchtritt.

5. Vorrichtung nach Anspruch 1, wobei die Signalermöglichungseinrichtung eine optische Abtasteinrichtung (110) einschließt.

6. Vorrichtung nach Anspruch 4, wobei die beabstandeten Signalauslöseeinrichtungen (107, 108) ein Paar 180° voneinander beabstandete Öffnungen benachbart zu dem Umfang der Scheibe (106) umfassen, eine Lichtstrahlerzeugungseinrichtung (109) benachbart zu einer Seite des Umfangs der Scheibe (106) montiert ist zum Leiten eines Lichtstrahles durch die Öffnungen (107, 108) jedesmal dann, wenn diese mit der Lichterzeugungseinrichtung (109) ausgerichtet sind, und ein Lichtschalter (1 10) auf der gegenüberliegenden Seite des Umfangs der Scheibe (106) montiert ist zum Erzeugen des ersten periodischen Signalimpulses jedesmal dann, wenn der Lichtstrahl durch die Öffnung (107, 108) hindurchtritt.

7. Vorrichtung nach einem vorhergehenden Anspruch, wobei das Gehäuse(16) eine Innenfläche aufweist, die durch den Flügel (76) kontaktiert wird, wobei der Flügel (76) und die Oberfläche aus einem selbstschmierenden Material hergestellt ist.

8. Vorrichtung nach Anspruch 7, wobei die Innenfläche des Gehäuses (16) und der Flügel (76) mit einem Polyamid oder Polytetrafluorethylen beschichtet ist.

9. Vorrichtung nach Anspruch 1, die außerdem eine Federeinrichtung (78) zum Drücken des Flügels (76) nach außen gegen die Gehäuseinnenfläche einschließt.

10. Vorrichtung nach Anspruch 9, wobei der Rotor ein Paar von Schlitzen aufweist, die an gegenüberliegenden Seiten desselben angeordnet sind, und wobei ein Paar Flügel (76) in gegenüberliegender Beziehung in den jeweiligen Schlitzen angeordnet sind; und wobei zumindest eine Feder (78) zwischen den gegenüberliegenden Paaren von Flügeln (76) positioniert ist, um die Flügel (76) gegen die Gehäuseinnenfläche zu drücken.

11. Vorrichtung nach Anspruch 1, wobei der Rotor (34) eine Fläche aufweist, die in einen nahen Kontakt mit einer Innenfläche des Gehäuses (16) entlang einer Nahkontaktlinie (C), die in einer gemeinsamen Ebene mit der ersten Längsachse (A) liegt, kommt, um eine Vakuumkammer (22) zwischen dem Rotor (34) und der Innenfläche zu bilden, wobei der Flüssigkraftstoffeinlaß (28) sich durch die Innenfläche in einer Verbindung mit der Vakuumkammer (22) erstreckt und winkelförmig von der stromaufwärtigen Seite der Ebene benachbart zu der Kontaktlinie (C) beabstandet ist, wobei der Kraftstoffauslaß (86) sich durch die Innenfläche in einer Verbindung mit der Vakuumkammer (22) erstreckt und winkelformig von der stromabwartigen Seite der Ebene benachbart zu der Kontaktlinie (C) zum Fördern von umgewandeltem Kraftstoff beabstandet ist.

12. Vorrichtung um Umwandeln eines brennbaren Flüssigkraftstoffes in einen brennbaren Zustand und zum Zuführen des umgewandelten Kraftstoffes zu einem Brennraum, mit einer Vakuumkammer (22), die ein zylindrisches Gehäuse (16) einschließt, die eine erste Längsachse (A) aufweist, mit einem Flüssigkraftstoffeinlaß in dem Gehäuse und einem Kraftstoffauslaß (86) in dem Gehäuse, der von dem Einlaß beabstandet ist, wobei der Einlaß in Form einer Kraftstoffdosiereinrichtung zum Einführen makroskopischer Flüssigkraffstofftröpfchen in die Vakuumkammer (22) ausgebildet ist, **dadurch gekennzeichnet**, daß ein exzentrisch montierter zylindrischer Rotor (34) in dem Gehäuse (16) zur Drehung um eine zweite Längsachse (B) montiert ist, die von der ersten Achse (A) versetzt ist, wobei der Rotor (34) eine Fläche aufweist, die in einen nahen Kontakt mit einer Innenfläche des Gehäuses (16) entlang einer Nahkontaktlinie (C) kommt, die in einer gemeinsamen Ebene mit der ersten Längsachse (A) liegt, um die Vakuumkammer (22) zwischen dem Rotor (34) und der Innenfläche zu bilden, wobei zumindest ein radialer Schlitz in dem Rotor vorgesehen ist und ein im allgemeinen rechteckiger Flügel (76) verschiebbar in dem Schlitz aufgenommen wird, wobei der Flügel (76) nach außen gegen das Gehäuse (16) gedrückt wird, wenn der Rotor (34) gedreht wird, um Kraftstoff aus makroskopischen Tröpfchen umzuwandeln, der zu dem Einlaß (28) zugeführt wird, in einen umgewandelten Kraftstoff in Form eines Gemisches von mikroskopischen Flüssigkeitströpfchen und verdampftem Kraftstoff, wobei der Einlaß (28) sich durch die Innenfläche in einer Verbindung mit der Vakuumkammer (22) erstreckt und winkelförmig zur stromaufwärtigen Seite der Ebene benachbart zur Kontaktlinie (C) beabstandet ist, wobei der Kraftstoffauslaß (86) sich durch die Innenfläche in einer Verbindung mit der Vakuumkammer (22) erstreckt und winkelförmig von der stromabwärtigen Seite der Ebene benachbart zur Kontaktlinie (C) beabstandet ist zum Fördern von umgewandeltem Kraftstoff, wobei eine Luftkammer (70) mit dem Auslaßteil (86) zum Aufnehmen von umgewandeltem Kraftstoff verbunden ist, wobei ein Lufteinlaß in der Luftkammer (70) in einem Winkel zum Auslaßtell (86) zum Einspritzen von Luft in die Luftkammer (70) und zum Vermischen mit den mikroskopischen Flüssigpartikeln vorgesehen ist und eine Einrichtung vorgesehen ist, die die Luftkammer (70) mit einem Luftansaugverteiler verbindet zum Zuführen eines Gemisches von Luft und umgewandeltem Kraftstoff zu einem Motor.

13. Vorrichtung nach Anspruch 12, die außerdem ein elektronisches Kraftstoffbehandlungs-Steuermodul (104) zum Steuern des durch die Kraftstoffdosiereinrichtung eingespritzten Kraftstoffes einschließt.

14. Vorrichtung nach Anspruch 12, wobei die Luftkammer (70) eine Verengung (72), die den Lufteinlaß bildet, einschließt, eine Kammer (94) benachbart zu dem Auslaß (86) einschließt, die mit der Verengung (92) in Verbindung steht und ein größeres Volumen als die Verengung (92) zum Mischen der Luft und des Kraftstoffs aufweist.

15. Vorrichtung nach Anspruch 14, die außerdem eine Trennwand (96) in der Kammer (94) einschließt, um die Strömung der Luft von der Verengung (92) durch die Luftkammer (70) zu unterteilen, wobei der Auslaß (86) durch die Trennwand (96) im wesentlichen halbiert ist, um eine Durchwirbelung der Luft, die durch die Kammer (94) hindurchtritt, zu erzeugen und um die Vermischung derselben mit dem umgewandelten Kraftstoff zu steigern.

16. Vorrichtung nach Anspruch 15, wobei die Mischkammer (94) außerdem eine gekrümmte Wand (97) gegenüberliegend zu der Auslaßöffnung (86) einschließt, um zusätzlich die Luft und den umgewandelten Kraftstoff zu vermischen.

17. Verfahren zum Abgeben eines umgewandelten Kraftstoffes in den Einlaßverteiler eines Motors, mit den Verfahrensschritten: Einführen makroskopischer Flüssigkeitskraftstofftröpfchen in eine geschlossene Vakuumkammer (22) bei Umgebungstemperatur, Umwandeln des Kraftstoffs, Fördern des umgewandelten Kraftstoffs aus der Kammer (22), Vermischen des umgewandelten Kraftstoffs mit Luft, um ein Kraftstoff-Luft-Gemisch zu bilden und Einführen des Kraftstoff-Luft-Gemisches in den Brennraum eines Motors, wobei die Vakuumkammer (22) die makroskopischen Flüssigkraftstofftröpfchen in gasförmigen Kraftstoff und mikroskopische Flüssigkraftstofftröpfchen umwandelt, **dadurch gekennzeichnet**, daß der gasförmig Kraftstoff und die mikroskopischen Flüssigkraftstofftröpfchen den umgewandelten Kraftstoff bilden, wobei ein kleinerer Teil desselben Dampf ist und ein größerer Teil desselben mikroskopische Flüssigtröpfchen sind.

18. Verfahren nach Anspruch 17, wobei die Vakuumkammer (22) einen exzentrisch montierten Rotor (34) in einem zylindrischen Gehäuse (16), ein Flüssigkraftstoffeinlaß (28) in dem Gehäuse und ein Kraftstoffauslaß (86) in dem Gehäuse, der von dem Einlaß (28) versetzt ist, aufweist.

19. Verfahren nach Anspruch 17, wobei die Luft zu dem umgewandelten Kraftstoff im wesentlichen in einem rechten Winkel dazu eingeleitet wird, um eine im wesentlichen vollständige Vermischung des umgewandelten Kraftstoffes und der Luft vor dem Eintritt in den Motor abzusichern.

20. Verfahren nach Anspruch 19, das außerdem den Verfahrensschritt der Verwendung eines Luftstromes während des Verfahrensschrittes der Vermischung einschließt, um einen zwangsläufigen Strom des Gemisches in den Brennraum zu erzeugen.

21. Verfahren nach Anspruch 19, die außerdem den Verfahrensschritt des Erwärmens der Kammer einschließt.

22. Verfahren nach Anspruch 21, wobei der Verfahrensschritt des Erwärmens durch den Reibwiderstand der bewegenden Teile innerhalb der Kammer ausgeführt wird.

23. Verfahren nach einem der Ansprüche 17 bis 22, wobei der Kraftstoff Alkohol oder ein anderer stark startender Kraftstoff ist.

24. Verfahren nach Anspruch 17, wobei der Verfahrensschritt des Umwandelns die Verwendung von Vakuum einschließt, um die Verdampfungsrate der Flüssigkraftstofftröpfchen zu erhöhen, um einen Teil des Kraftstoffes zu verdampfen, das Expandieren und Abtrennen absorbierter Gase von den makroskopischen Flüssigkraftstofftröpfchen einschließt, um diese wegzublasen und in mikroskopische Flüssigkraftstofftröpfchen aufzuspalten, die Verwendung mechanischer Energie einschließt, um die makroskopischen Flüssigkraftstofftröpfchen zu bewegen, um die Oberflächenspannung innerhalb der Tröpfchen aufzubrechen und um zusätzlich absorbierte Gase freizugeben, und die Verwendung von Wärmeenergie einschließt, um die Temperatur der Flüssigkraftstofftröpfchen anzuheben, um die Verdampfung und die Expansion und Abtrennung der absorbierten Gase zu steigern.

25. Verfahren einem der Ansprüche 17 bis 24, wobei die Vakuumkammer (22) zylindrisch ausgebildet ist, ein exzentrisch montierter Rotor (34) drehbar innerhalb der Kammer (22) befindlich ist und mit zumindest einem Flügel (76) versehen ist, und zumindest ein Einspritzventil (28) zum Einführen der makroskopischen Flüssigkraftstoffströpfchen in die Kammer (22) vorgesehen ist, wobei das Verfahren folgende Verfahrensschritte umfaßt: Abtasten der Drehposition des Flügels (76), Abtasten der Drehposition einer Kurbelwelle eines damit verbundenen Motors und Aktivieren der Einspritzventile (28), wenn sowohl die Flügel (76) als auch die Kurbelwelle in einer gewünschten Position befindlich sind.

26. Verfahren nach Anspruch 25 mit den Verfahrensschritten: Abtasten der Drehposition der Flügel (76), Abtasten der Drehmposition der Kurbelwelle, Aktivieren eines Elektromotors (66) während des Warmlaufens, um den Rotor (34) zu drehen, Erzeugen eines Blockierungssignals im Ansprechen auf die Aktivierung des Elektromotors (66), um das Abtasten der Drehposition des Flügels (76) zu sperren und Aktivieren der Einspritzventile (28) nur im Ansprechen auf die Drehposition der Kurbelwelle.

## Revendications

1. Dispositif pour convertir un carburant liquide combustible en un état combustible et pour introduire le carburant converti dans une chambre de combustion, comprenant une chambre à vide (22) comportant un carter cylindrique (16) ayant un premier axe longitudinal (A) avec une entrée de carburant liquide dans ledit carter et une sortie de carburant (86) dans ledit carter espacée de ladite entrée, ladite entrée étant sous la forme d'un moyen d'injecteur de carburant (28) pour introduire des gouttelettes macroscopiques de carburant liquide dans ladite chambre à vide (22), caractérisé en ce qu'un rotor cylindrique (34) monté excentriquement est monté dans ledit carter (16) de manière à être entraîné en rotation autour d'un deuxième axe longitudinal (B) décalé dudit premier axe (A), au moins une fente radiale étant prévue dans ledit rotor (34) et une palette généralement rectangulaire (76) étant reçue à coulissement dans ladite fente, ladite palette (76) étant poussée vers l'extérieur contre ledit carter (16) lorsque ledit rotor (34) est entraîné en rotation pour convertir ledit carburant de gouttelettes macroscopiques, introduites dans ladite chambre (22) par le biais dudit moyen d'injecteur (28), en carburant converti sous la forme d'un mélange de gouttelettes liquides microscopiques et de carburant vaporisé, ledit moyen d'injecteur (28) étant commandé en réponse à la position rotationnelle de ladite palette (76) sur le rotor (34) par rapport à l'emplacement du moyen d'injecteur (28) dans la chambre à vide (22), un arbre de rotor monté à rotation (44) étant connecté au rotor (34) pour entraîner le rotor en rotation à l'intérieur du carter (16), un moyen d'activation de signal (106) sur ledit arbre de rotor (44) fournissant des premières impulsions de signal périodiques en réponse à la position rotationnelle angulaire dudit arbre de rotor (44) et un dispositif électronique (104) de capteurs du moteur étant prévu, réagissant aux signaux d'entrée provenant de capteurs du moteur (110, 116, 117), indiquant des états du moteur, et réagissant en outre à chaque première impulsion de signal de sortie provenant dudit moyen d'activation de signal (106) pour fournir un signal de sortie pour activer le moyen d'injecteur (28) afin de fournir une quantité mesurée de gouttelettes macroscopiques de carburant à la chambre à vide (22).

2. Appareil selon la revendication 1, dans lequel ledit moyen d'activation de signal (106) fournit lesdites premières impulsions de signal chaque fois que ladite au moins une palette (76) passe devant l'injecteur (28).

3. Appareil selon la revendication 1, comportant en outre un capteur (117) réagissant à une position angulaire souhaitée du vilebrequin, indiquant que les cylindres du moteur sont dans une position optimale pour recevoir une charge de carburant, ledit capteur fournissant des deuxièmes impulsions de signal périodiques et étant l'un des capteurs du moteur, et un démarreur électrique (66) connecté audit arbre du rotor (44) pour l'utilisation optionnelle au cours du démarrage du moteur, ledit démarreur (66) fournissant un signal de blocage, lorsque ledit démarreur tourne, audit dispositif électronique de capteurs du moteur pour bloquer lesdites premières impulsions de signal de sorte que les injecteurs de carburant (28) soient activés uniquement en réponse auxdites deuxièmes impulsions de signal périodiques.

4. Appareil selon la revendication 1, dans lequel ledit moyen d'activation de signal comporte un disque (106) monté de manière à être entraîné en rotation avec ledit arbre de rotor (44), ledit disque (106) ayant une paire de moyens espacés facilitant les signaux (107, 108) adjacents à la périphérie dudit disque (106) et espacés de 180° l'un de l'autre, un moyen de capteur monté adjacent à ladite périphérie dudit disque (106) pour générer ladite première impulsion de signal périodique chaque fois que ledit moyen facilitant les signaux (107, 108) passe devant ledit moyen de capteur (110).

5. Appareil selon la revendication 1, dans lequel ledit moyen facilitant les signaux comporte un moyen de capteur optique (110).

6. Appareil selon la revendication 4, dans lequel lesdits moyens espacés facilitant les signaux (107, 108) comprennent une paire d'ouvertures adjacentes à la périphérie dudit disque (106) et espacées de 180° l'une de l'autre, un moyen de génération d'un faisceau lumineux (109) étant monté adjacent à un côté de ladite périphérie dudit disque (106) pour diriger un faisceau de lumière à travers lesdites ouvertures (107, 108) chaque fois qu'elles sont alignées avec ledit moyen de génération de lumière (109), et un commutateur de lumière (110) monté sur le côté opposé de ladite périphérie dudit disque (106) pour générer ladite première impulsion de signal périodique chaque fois que le faisceau lumineux passe à travers ladite ouverture (107, 108).

7. Appareil selon l'une quelconque des revendications précédentes, dans lequel ledit carter (16) a une surface interne contre laquelle ladite palette (76) vient en contact, ladite palette (76) et ladite surface étant fabriquées en un matériau lubrifiant.

8. Appareil selon la revendication 7, dans lequel ladite surface interne dudit carter (16) et ladite palette (76) sont revêtues d'un polyamide ou d'un polytétrafluoréthylène.

9. Appareil selon la revendication 1, comportant en outre un moyen de ressort (78) pour pousser ladite palette (76) vers l'extérieur contre ladite surface interne du carter.

10. Appareil selon la revendication 9, dans lequel ledit rotor a une paire de fentes agencées sur ses côtés opposés et une paire de palettes (76) sont agencées en relation opposée dans lesdites fentes respectives; et au moins un ressort (78) est positionné entre lesdites paires de palettes (76) opposées pour pousser lesdites palettes (76) contre ladite surface interne du carter.

11. Appareil selon la revendication 1, dans lequel ledit rotor (34) a une surface qui vient en quasi-contact avec une surface interne dudit carter (16) le long d'une quasi-ligne de contact (C) se trouvant dans un plan commun avec ledit premier axe longitudinal (A) pour former une chambre à vide (22) entre ledit rotor (34) et ladite surface interne, l'entrée de carburant liquide (28) s'étendant à travers ladite surface interne en communication avec ladite chambre à vide (22) et étant espacée angulairement du côté amont dudit plan adjacent à ladite ligne de contact (C), ladite sortie de carburant (86) s'étendant à travers ladite surface interne en communication avec ladite chambre à vide (22) et étant espacée angulairement du côté aval dudit plan adjacent à ladite ligne de contact (C) pour décharger le carburant converti.

12. Dispositif pour convertir un carburant liquide combustible en un état combustible et pour introduire le carburant converti dans une chambre de combustion, comprenant une chambre à vide (22) comportant un carter cylindrique (16) ayant un premier axe longitudinal (A) avec une entrée de carburant liquide dans ledit carter et une sortie de carburant (86) dans ledit carter, espacée de ladite entrée, ladite entrée étant sous la forme d'un moyen de dosage du carburant pour introduire des gouttelettes macroscopiques de carburant liquide dans ladite chambre à vide (22), caractérisé en ce qu'un rotor cylindrique (34) monté excentriquement est monté dans ledit carter (16) de manière à être entraîné en rotation autour d'un deuxième axe longitudinal (B) décalé dudit premier axe (A), dans lequel ledit rotor (34) a une surface qui vient en quasi-contact avec une surface interne dudit carter (16) le long d'une quasi-ligne de contact (C) se trouvant dans un plan commun avec ledit premier axe longitudinal (A) pour former la chambre à vide (22) entre ledit rotor (34) et ladite surface interne, au moins une fente radiale étant prévue dans ledit rotor et une palette généralement rectangulaire (76) étant reçue à coulissement dans ladite fente, ladite palette (76) étant poussée vers l'extérieur contre ledit carter (16) lorsque ledit rotor (34) est entraîné en rotation pour convertir ledit carburant, de gouttelettes macroscopiques introduites vers ladite entrée (28), en carburant converti sous la forme d'un mélange de gouttelettes liquides microscopiques et de carburant vaporisé, ladite entrée (28) s'étendant à travers ladite surface interne en communication avec ladite chambre à vide (22) et étant espacée angulairement du côté amont dudit plan adjacent à ladite ligne de contact (C), ladite sortie de carburant (86) s'étendant à travers ladite surface interne en communication avec ladite chambre à vide (22) et étant espacée angulairement du côté aval dudit plan adjacent à ladite ligne de contact (C) pour décharger le carburant converti, un plénum (70) étant connecté à la partie de sortie (86) pour recevoir le carburant converti, une admission d'air étant prévue dans ledit plénum (70) à un certain angle par rapport à ladite partie de sortie (86) pour injecter de l'air dans ledit plénum (70) et le mélanger avec les particules liquides microscopiques, et un moyen connectant ledit plénum (70) à un collecteur d'admission d'air pour introduire un mélange d'air et de carburant converti dans un moteur.

13. Dispositif selon la revendication 12, comportant en outre un module de régulation électronique de gestion de carburant (104) pour réguler le carburant injecté par le moyen de dosage de carburant.

14. Dispositif selon la revendication 12, dans lequel ledit plénum (70) comporte un étranglement (92) formant ladite admission d'air, une chambre (94) adjacente à ladite sortie (86) communiquant avec ledit étranglement (92) et ayant un volume supérieur à celui dudit étranglement (92) pour mélanger l'air et le carburant.

15. Dispositif selon la revendication 14, comportant en outre une paroi de séparation (96) dans ladite chambre (94) pour séparer l'écoulement d'air provenant dudit étranglement (92) à travers ledit plénum (70), ladite sortie (86) étant substantiellement divisée en deux par ladite paroi de séparation (96) pour créer des turbulences dans l'air passant à travers ladite chambre (94) pour améliorer son mélange avec le carburant converti.

16. Dispositif selon la revendication 15, dans lequel ladite chambre de mélange (94) comporte en outre une paroi incurvée (97) opposée audit port de sortie (86) pour mélanger davantage l'air et le carburant converti.

17. Procédé pour introduire un carburant converti dans le collecteur d'admission d'un moteur comprenant les étapes consistant à introduire des gouttelettes macroscopiques de carburant liquide dans une chambre à vide fermée (22) à température ambiante, convertir le carburant, décharger le carburant converti depuis la chambre (22), mélanger le carburant converti et de l'air pour former un mélange air-carburant, introduire le mélange air-carburant dans la chambre de combustion d'un moteur, ladite chambre à vide (22) convertissant alors les gouttelettes macroscopiques de carburant liquide en carburant gazeux et en gouttelettes microscopiques de carburant liquide, caractérisé en ce que le carburant gazeux et les gouttelettes microscopiques de carburant liquide forment le carburant converti, dont une plus petite portion est constituée par de la vapeur et une plus grande portion est constituée par des gouttelettes microscopiques liquides.

18. Procédé selon la revendication 17, dans lequel la chambre à vide (22) a un rotor (34) monté excentriquement à l'intérieur d'un carter cylindrique (16) et une entrée (28) de carburant liquide dans le carter et une sortie (86) de carburant dans le carter décalée de l'entrée (28).

19. Procédé selon la revendication 17, dans lequel l'air est introduit dans le carburant converti substantiellement à angle droit par rapport à celui-ci pour assurer un mélange substantiellement complet du carburant converti et de l'air avant l'entrée dans le moteur.

20. Procédé selon la revendication 19, comportant l'étape supplémentaire consistant à utiliser l'écoulement d'air au cours de l'étape de mélange pour créer un écoulement positif du mélange dans la chambre de combustion.

21. Procédé selon la revendication 19, comportant l'étape supplémentaire consistant à chauffer la chambre.

22. Procédé selon la revendication 21, dans lequel ladite étape de chauffage est effectuée par la résistance de frottement des pièces mobiles à l'intérieur de la chambre.

23. Procédé selon l'une quelconque des revendications 17 à 22, dans lequel ledit carburant est de l'alcool ou un autre carburant à démarrage dur.

24. Procédé selon la revendication 17, dans lequel ladite étape de conversion comporte l'utilisation de vide pour augmenter la vitesse d'évaporation des gouttelettes de carburant liquide pour vaporiser une partie du carburant, la détente et la libération des gaz absorbés provenant des gouttelettes macroscopiques de carburant liquide afin de les dissocier et des les diviser en gouttelettes microscopiques de carburant liquide, l'utilisation de l'énergie mécanique pour agiter les gouttelettes macroscopiques de carburant liquide pour rompre la tension superficielle à l'intérieur des gouttes pour libérer des gaz absorbés supplémentaires, et l'utilisation de l'énergie thermique pour augmenter la température des gouttelettes de carburant liquide pour améliorer la vaporisation et la détente et la libération des gaz absorbés.

25. Procédé selon l'une quelconque des revendications 17 à 24, dans lequel la chambre à vide (22) est cylindrique, un rotor (34) monté excentriquement pouvant être entraîné en rotation à l'intérieur de ladite chambre (22) et étant pourvu d'au moins une palette (76), au moins un injecteur de carburant (28) étant prévu pour introduire lesdites gouttelettes macroscopiques de carburant liquide dans ladite chambre (22), le procédé comprenant les étapes consistant à capter la position rotationnelle de la palette (76), à capter la position rotationnelle d'un vilebrequin d'un moteur associé et à activer les injecteurs de carburant (28) lorsque les deux palettes (76) et le vilebrequin sont dans une position souhaitée.

26. Procédé selon la revendication 25, comprenant les étapes consistant à capter la position rotationnelle des palettes (76), à capter la position rotationnelle du vilebrequin, à activer un démarreur électrique (66) au cours du démarrage pour faire tourner le rotor (34), à fournir un signal de blocage en réponse à l'activation du démarreur électrique (66) pour inhiber le captage de la position rotationnelle de la palette (76), et à activer les injecteurs de carburant (28) uniquement en réponse à la position rotationnelle du vilebrequin.
